(19) Europäisches Patentamt
European Patent Office
Office européen des brevets

(11) **EP 4 546 292 A1**

(12) **EUROPEAN PATENT APPLICATION**
published in accordance with Art. 153(4) EPC

(43) Date of publication:
**30.04.2025 Bulletin 2025/18**

(21) Application number: **23842344.6**

(22) Date of filing: **19.07.2023**

(51) International Patent Classification (IPC):
**G06V 20/64** (2022.01)          **G06V 40/20** (2022.01)

(86) International application number:
**PCT/CN2023/108089**

(87) International publication number:
**WO 2024/017282 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2022 CN 202210857637**

(71) Applicant: **Huawei Technologies Co., Ltd.**
**Shenzhen, Guangdong 518129 (CN)**

(72) Inventors:
• **LI, Zhihao**
  **Shenzhen, Guangdong 518129 (CN)**
• **LIU, Jianzhuang**
  **Shenzhen, Guangdong 518129 (CN)**
• **XU, Songcen**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **DATA PROCESSING METHOD AND DEVICE**

(57)     A data processing method relates to the artificial intelligence field, and includes: processing a target image by using a first pose recognition model, to obtain first pose information of a target object in the target image; processing the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object; and constructing a loss based on the first pose information, the second pose information, the two-dimensional projection information, and a corresponding annotation, where the loss is used to update the second pose recognition model.

```
          Obtain a target image                              801

Process the target image by using a first pose recognition model, to obtain first      802
pose information of a target object in the target image

Process the target image by using a second pose recognition model, to obtain           803
second pose information of the target object in the target image, where the first
pose information and the second pose information are used to describe a three-
dimensional pose of the target object, and the second pose information is used to
determine two-dimensional projection information of a predicted pose of the
target object

Construct a loss based on the first pose information, the second pose                   804
information, the two-dimensional projection information, and a corresponding
annotation, where the loss is used to update the second pose recognition model
```

FIG. 8

**Description**

This application claims priority to Chinese Patent Application No. 202210857637.7, filed with the China National Intellectual Property Administration on July 20, 2022 and entitled "DATA PROCESSING METHOD AND APPARATUS", which is incorporated herein by reference in its entirety.

## TECHNICAL FIELD

This application relates to the field of artificial intelligence, and in particular, to a data processing method and apparatus.

## BACKGROUND

A human body motion capture technology is a common technology in the film and television industry and the game industry. The technology can process an input video stream to capture a pose of a human body in each frame of image, so as to obtain motion information of the human body. Based on this technology, pose data of a human body during motion can be extracted from massive videos, and there are wide application scenarios, for example, virtual character driving, teleconferencing, and metaverse in an augmented reality (augmented reality, AR) scenario and a virtual reality (virtual reality, VR) scenario.

Currently, human body motion capture may be implemented based on an AI technology. Specifically, for an image, the image may be processed by using a trained neural network, to obtain a pose parameter. The pose parameter may be used to determine a pose of a human body.

However, a neural network used in the conventional technology is updated based on only a loss constructed based on two-dimensional projection information. Although pixel-level alignment between a predicted pose and a pose in an image or a video can be implemented, the predicted pose may have a problem of action distortion and improperness.

## SUMMARY

This application provides a data processing method. Pose information that has no or substantially has no distortion is introduced as a supervision signal (or referred to as prior information, that is, first pose information) for training a pose recognition model, to ensure that pixel-level alignment can be implemented between a pose determined based on pose information output by an updated pose recognition model and a pose of a character object in an image, and the determined pose has no distortion (or substantially has no distortion).

According to a first aspect, this application provides a data processing method, including: obtaining a target image; processing the target image by using a first pose recognition model, to obtain first pose information of a target object in the target image; processing the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object; and constructing a loss based on the first pose information, the second pose information, the two-dimensional projection information, and a corresponding annotation, where the loss is used to update the second pose recognition model.

In a possible implementation, for a pose recognition model that needs to be trained, information used to describe the three-dimensional pose of the target object may usually be output in a feedforward process, two-dimensional key point optimization is performed on the information, that is, two-dimensional projection information is obtained in a specific mapping manner, and the pose recognition model is updated by using a loss constructed based on a difference between the obtained two-dimensional projection information and a corresponding annotation. In this way, pixel-level alignment can be implemented between a pose determined based on pose information output by an updated pose recognition model and a pose of a character object in an image. However, in this manner, the determined pose may be distorted or abnormal. In this embodiment of this application, pose information that has no or substantially has no distortion is introduced as a supervision signal (or referred to as prior information) for training a pose recognition model, to ensure that pixel-level alignment can be implemented between a pose determined based on pose information output by an updated pose recognition model and a pose of a character object in an image, and the determined pose has no distortion (or substantially has no distortion).

In a possible implementation, the foregoing introduced supervision signal (or referred to as prior information) may be provided by the first pose recognition model.

In a possible implementation, the first pose recognition model is obtained through training based on a loss constructed based on output pose information and a corresponding annotation.

The first pose recognition model may obtain the pose information of the target object in the target image in an end-to-end manner by processing the image. A pose parameter usually includes two parts of parameters. One part of the parameters indicates a rotation angle of the target object relative to a camera, and the other part of the parameters indicates an included angle between joints of the target object. Optionally, the other part of the parameters may further indicate a location of a three-dimensional coordinate point on the target object.

In a possible implementation, the first pose information may be used to describe the three-dimensional pose of the target object, for example, may indicate the included angle between the joints of the target object, or indicate the location of the three-dimensional coordinate point on the target object.

In a possible implementation, first body shape information of the target object in the target image is further obtained by processing the target image by using the first pose recognition model; second body shape information of the target object in the target image is further obtained by processing the target image by using the second pose recognition model; and the constructing a loss based on the first pose information, the second pose information, the key point location information, and a corresponding annotation value includes: constructing the loss based on the first pose information, the second pose information, the key point location information, the corresponding annotation value, the first body shape information, and the second body shape information.

The first body shape information may also be referred to as a shape (shape) parameter, and indicate a three-dimensional shape of the target object. A displacement parameter indicates an amplitude occupied by the target object in a target area, and an offset of the target object in the target area (for example, a degree of a left offset or a degree of a right offset of the target object in a case that a center point of the target area is used as a reference point).

In a possible implementation, the target image is an image area in which the target object is located in an original image. During calculation of the two-dimensional projection information, the two-dimensional projection information is represented as a location of a two-dimensional projection of the predicted pose in the original image. In other words, a reprojection error may be calculated on the full image, and this is closer to a projection process during image formation.

In a possible implementation, the target object is a character.

In a possible implementation, the method further includes: processing the target image by using an updated second pose recognition model, to obtain third pose information of the target object in the target image, where the third pose information is used to determine a pose of the target object.

In a possible implementation, after the updated second pose recognition model is obtained in the foregoing manner, the target image may be processed by using the updated second pose recognition model, to obtain the third pose information of the target object in the target image, where the third pose information is used to determine the pose of the target object. Similarly, for another frame of image in a video stream, an operation similar to that performed on the target image may also be performed, to obtain a plurality of consecutive poses of the target object and form motion information of the target object.

In a possible implementation, after the third pose information is obtained, the pose that is of the target object and that is obtained by processing the target image by using the updated second pose recognition model may be sent to user equipment; or the updated second pose recognition model may be sent to user equipment.

In a possible implementation, the annotation is a manual advance annotation, or is obtained by processing the target image by using a pre-trained model.

According to a second aspect, this application provides a data processing apparatus, including:

an obtaining module, configured to obtain a target image;
an image processing module, configured to process the target image by using a first pose recognition model, to obtain first pose information of a target object in the target image; and
process the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object; and
a model update module, configured to construct a loss based on the first pose information, the second pose information, the two-dimensional projection information, and a corresponding annotation, where the loss is used to update the second pose recognition model.

In a possible implementation, the first pose recognition model is obtained through training based on a loss constructed based on output pose information and a corresponding annotation.

In a possible implementation, first body shape information of the target object in the target image is further obtained by processing the target image by using the first pose recognition model;

second body shape information of the target object in the target image is further obtained by processing the target image by using the second pose recognition model; and
the model update module is specifically configured to:

construct the loss based on the first pose information, the second pose information, the key point location information, the corresponding annotation value, the first body shape information, and the second body shape information.

In a possible implementation, the target image is an image area in which the target object is located in an original image. During calculation of the two-dimensional projection information, the two-dimensional projection information is represented as a location of a two-dimensional projection of the predicted pose in the original image. In other words, a reprojection error may be calculated on the full image, and this is closer to a projection process during image formation.

In a possible implementation, the target object is a character.

In a possible implementation, the image processing module is further configured to: process the target image by using an updated second pose recognition model, to obtain third pose information of the target object in the target image, where the third pose information is used to determine a pose of the target object.

In a possible implementation, the apparatus further includes:

a sending module, configured to send, to user equipment, the pose that is of the target object and that is obtained by processing the target image by using the updated second pose recognition model; or
send the updated second pose recognition model to user equipment.

In a possible implementation, the annotation is a manual advance annotation, or is obtained by processing the target image by using a pre-trained model.

According to a third aspect, an embodiment of this application provides a data processing apparatus. The apparatus may include a memory, a processor, and a bus system. The memory is configured to store a program, and the processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor, configured to support an execution device or a training device to implement functions in the foregoing aspects, for example, send or process data or information in the foregoing method. In a possible design, the chip system further includes a memory. The memory is configured to store program instructions and data that are necessary for the execution device or the training device. The chip system may include a chip, or may include a chip and another discrete component.

## BRIEF DESCRIPTION OF DRAWINGS

FIG. 1A is a diagram of a structure of an artificial intelligence body framework;

FIG. 1B and FIG. 2 are diagrams of application system frameworks according to the present invention;

FIG. 3 is a diagram of an optional hardware structure of a terminal;

FIG. 4 is a diagram of a structure of a server;

FIG. 5 is a diagram of a system architecture according to this application;

FIG. 6 shows a cloud service procedure;

FIG. 7 shows a cloud service procedure;

FIG. 8 is a schematic flowchart of a data processing method according to an embodiment of this application;

FIG. 9 is a diagram of an application example of pose recognition according to an embodiment of this application;

FIG. 10 is a diagram of a result of pose recognition;

FIG. 11 is a diagram of a result of pose recognition;

FIG. 12A is a diagram of a reprojection error calculation method;

FIG. 12B is a diagram of an application example of pose recognition;

FIG. 12C is a diagram of an application example of pose recognition;

FIG. 13 is a diagram of a structure of a data processing apparatus according to an embodiment of this application;

FIG. 14 is a diagram of a structure of an execution device according to an embodiment of this application;

FIG. 15 is a diagram of a structure of a training device according to an embodiment of this application; and

FIG. 16 is a diagram of a structure of a chip according to an embodiment of this application.

## DESCRIPTION OF EMBODIMENTS

The following describes embodiments of the present invention with reference to accompanying drawings in embodiments of the present invention. Terms used in implementations of the present invention are merely used to explain specific embodiments of the present invention, but are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

The terms "substantially (substantially)", "about (about)", and the like are used herein as approximation terms rather than as degree terms, and are intended to take into account inherent deviations of measured values or calculated values that are known to a person of ordinary skill in the art. In addition, when embodiments of the present invention are described, "may (may)" is used to mean "one or more possible embodiments". The terms "use (use)", "using (using)", and "used (used)" used herein may be considered to be synonymous with the terms "utilize (utilize)", "utilizing (utilizing)", and "utilized (utilized)", respectively. In addition, the term "example (exemplary)" is intended to refer to an example or an illustration.

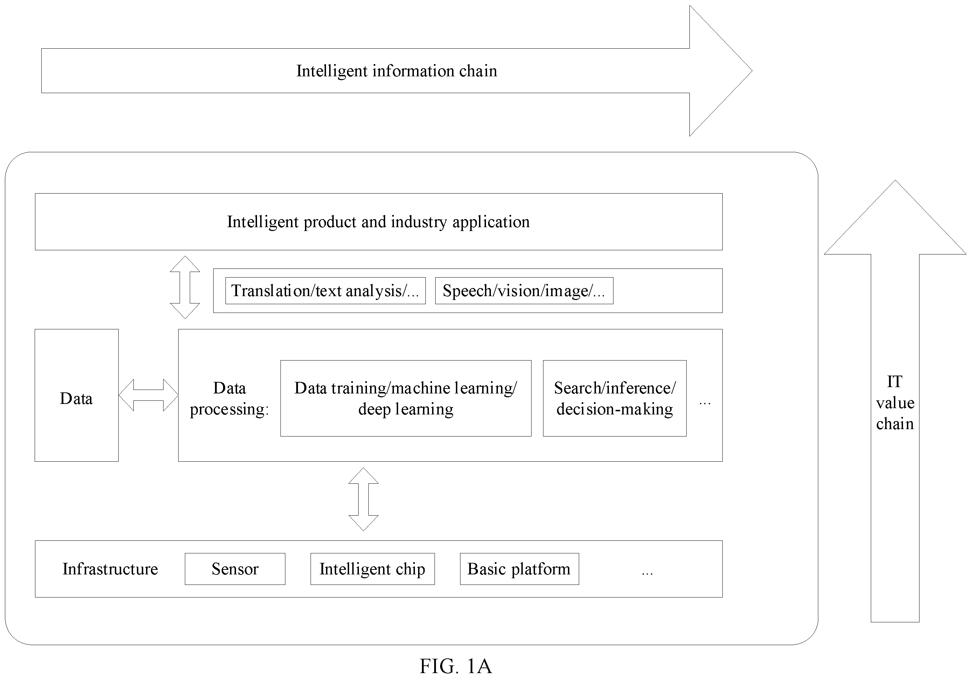

First, an overall working process of an artificial intelligence system is described. Refer to FIG. 1A. FIG. 1A is a diagram of a structure of an artificial intelligence body framework. The following describes the artificial intelligence body framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from underlying infrastructure and information (providing and processing technology implementation) of artificial intelligence to an industrial ecological process of a system.

(1) Infrastructure

The infrastructure provides computing capability support for an artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection network, and the like. For example, the sensor communicates with the outside to obtain data, and the data is provided for an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

The data processing usually includes a manner, for example, data training, machine learning, deep learning, search, inference, or decision-making.

Machine learning and deep learning may perform symbolic and formalized intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. Typical functions are searching and matching.

Decision-making is a process of making a decision after intelligent information is inferred, and usually provides functions such as classification, sorting, and prediction.

(4) General-purpose capability

After data processing mentioned above is performed on data, some general-purpose capabilities may be further formed based on a data processing result. For example, the general-purpose capabilities may be an algorithm or a general system, for example, translation, text analysis, computer vision processing, speech recognition, and image recognition.

(5) Intelligent product and industry application

The intelligent product and industry application mean a product and an application of an artificial intelligence system in various fields, and are a package of an overall solution of artificial intelligence, so that decision-making for intelligent information is productized and an application is implemented. Application fields thereof mainly include an intelligent terminal, smart transportation, intelligent healthcare, autonomous driving, a smart city, and the like.

First, an application scenario of this application is described. This application may be applied to, but is not limited to, an application that includes a human body motion capture and restoration function based on an image or a video (which may be referred to as a motion capture application for short below), a cloud service provided by a cloud server, or the like. Descriptions are separately provided below.

I. Motion capture application

A product form in embodiments of this application may be a motion capture application. The motion capture application may run on a terminal device or a server on a cloud side.

In a possible implementation, the motion capture application may implement a human body motion capture and restoration task performed based on an image or a video that includes a human body. The motion capture application may perform the human body motion capture and restoration task in response to an input image or video, to obtain 3D pose information corresponding to human body motion. A virtual character may be restored based on the 3D pose information, and a pose of the character is consistent with or approximately consistent with a human body pose in the image or the video.

In a possible implementation, a user may start a motion capture application installed on a terminal device, and input an image or a video (which may be actively input, or may be passively captured, for example, may be captured by using a camera on the terminal device). The motion capture application may perform human body motion capture and restoration for the image or the video by using the method provided in embodiments of this application, and presents 3D pose information or a virtual character restored based on the 3D pose information to the user (a presentation manner may be but is not limited to displaying, saving, uploading to a cloud side, or the like).

In a possible implementation, a user may start a motion capture application installed on a terminal device, and input an image or a video (which may be actively input, or may be passively captured, for example, may be captured by using a camera on the terminal device). The motion capture application may send the image or the video to a server on a cloud side. The server on the cloud side performs human body motion capture and restoration for the image or the video by using the method provided in embodiments of this application, and returns 3D pose information or information about a virtual character restored based on the 3D pose information to the terminal device. The terminal device may present the 3D pose information or the virtual character restored based on the 3D pose information to the user (a presentation manner may be but is not limited to displaying, saving, uploading to a cloud side, or the like).

In a possible implementation, a human body motion capture and restoration function implemented by the motion capture application may be specifically used to enable virtual character driving in application scenarios such as teleconferencing, sports and health, and metaverse in augmented reality (augmented reality, AR), virtual reality (virtual reality, VR), and mixed reality (mixed reality, MR).

The following describes the motion capture application in embodiments of this application from perspectives of a functional architecture and a product architecture for implementing a function.

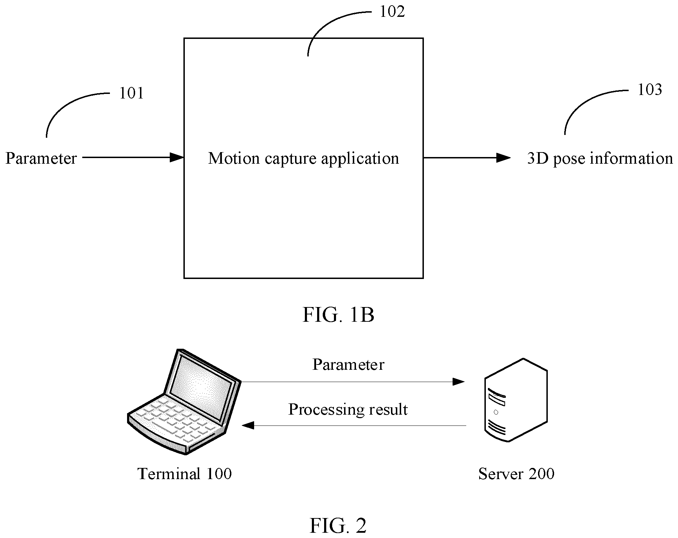

Refer to FIG. 1B. FIG. 1B is a diagram of a functional architecture of a motion capture application according to an embodiment of this application.

In a possible implementation, as shown in FIG. 1B, the motion capture application 102 may receive an input parameter 101 (for example, an image or a video that includes a human body) and generate 3D pose information 103 (or information about a virtual character restored based on the 3D pose information). The motion capture application 102 may be executed (for example) on at least one computer system and includes computer code. When being executed by one or more computers, the computer code causes the computer to perform the data processing method described herein.

Refer to FIG. 2. FIG. 2 is a diagram of an entity architecture of running a motion capture application according to an embodiment of this application.

Refer to FIG. 2. FIG. 2 is a diagram of a system architecture. The system may include a terminal 100 and a server 200. The server 200 may include one or more servers (in FIG. 2, an example in which one server is included is used for description), and the server 200 may provide a motion capture function service for one or more terminals.

A motion capture application may be installed on the terminal 100, or a web page related to a motion capture function may be opened. The application and the web page may provide an interface. The terminal 100 may receive a related parameter input by a user on the motion capture function interface, and send the parameter to the server 200. The server 200 may obtain a processing result based on the received parameter, and return the processing result to the terminal 100.

It should be understood that in some optional implementations, the terminal 100 may alternatively complete an action of obtaining a data processing result based on a received parameter without cooperation of the server. This is not limited in this embodiment of this application.

The following describes a product form of the terminal 100 in FIG. 2.

The terminal 100 in this embodiment of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

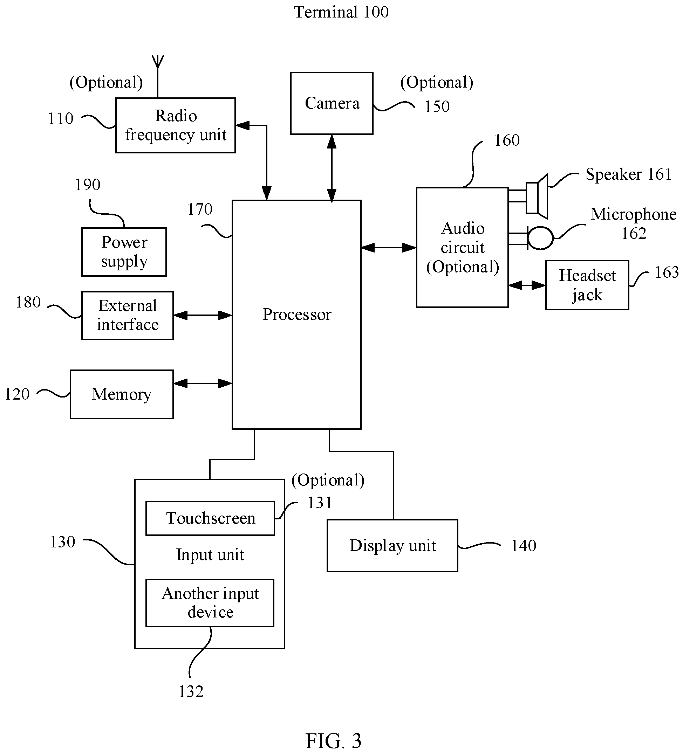

FIG. 3 is a diagram of an optional hardware structure of a terminal 100.

Refer to FIG. 3. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 3 is merely an example of the terminal or a multi-functional device and does not constitute a limitation on the terminal or the multi-functional device. The terminal or the multi-functional device may include more or fewer components than those shown in the figure, or combine some components, or have different components.

The input unit 130 may be configured to receive entered digit or character information, and generate a key signal input related to a user setting and function control of the portable multi-functional apparatus. Specifically, the input unit 130 may include a touchscreen 131 (optional) and/or another input device 132. The touchscreen 131 may collect a touch operation of a user on or near the touchscreen 131 (for example, an operation performed by the user on the touchscreen or near the touchscreen by using any proper object, for example, a finger, a joint, or a stylus), and drive a corresponding connection apparatus based on a preset program. The touchscreen may detect a touch action of the user on the touchscreen, convert the touch action into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared type, and a surface acoustic wave type. In addition to the touchscreen 131, the input unit 130 may further include the another input device. Specifically, the another input device 132 may include, but is not limited to, one or more of a physical keyboard, a function button (for example, a volume control button 132 or a power on/off button 133), a trackball, a mouse, or a joystick.

The input device 132 may receive an input image, an input video, or the like.

The display unit 140 may be configured to display information input by the user or information provided for the user, various menus of the terminal 100, an interaction interface, file display, and/or playing of any multimedia file. In this embodiment of this application, the display unit 140 may be configured to display an interface of a motion capture application, a virtual character obtained based on an image or a video, or the like.

The memory 120 may be configured to store instructions and data. The memory 120 may mainly include an instruction storage area and a data storage area. The data storage area may store various kinds of data such as a multimedia file and a text; and the instruction storage area may store software units such as an operating system, an application, and instructions required by at least one function, or subsets and extended sets thereof. The memory 120 may further include a non-volatile random access memory, and provide hardware, software, a data resource, and the like in a management and calculation processing device for the processor 170, to support control on software and an application. The memory 120 is further configured to: store a multimedia file, and store a running program and application.

The processor 170 is a control center of the terminal 100, connects various parts of the entire terminal 100 by using various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It may be understood that the modem processor may alternatively not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component in a calculation processing device, and read and process data in software, especially read and process the data and the program in the memory 120, so that functional modules perform corresponding functions, to control a corresponding component to perform an action as required by an instruction.

The memory 120 may be configured to store software code related to the data processing method. The processor 170 may perform steps of the data processing method of a chip, or may schedule another unit (for example, the input unit 130 and the display unit 140) to implement a corresponding function.

The radio frequency unit 110 (optional) may be configured to receive and send signals in an information receiving and sending process or a call process. For example, after receiving downlink information of a base station, the radio frequency unit 110 sends the downlink information to the processor 170 for processing. In addition, the radio frequency unit 110 sends related uplink data to the base station. Generally, the RF circuit includes but is not limited to an antenna, at least one amplifier, a transceiver, a coupler, a low noise amplifier (Low Noise Amplifier, LNA), a duplexer, or the like. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short messaging service (Short Messaging Service, SMS), and the like.

In this embodiment of this application, the radio frequency unit 110 may send an image or a video to a server 200, and receive 3D pose information sent by the server 200 or information about a virtual character that is restored based on the 3D pose information.

It should be understood that the radio frequency unit 110 is optional, and may be replaced with another communication interface, for example, may be a network interface.

The terminal 100 further includes the power supply 190 (such as a battery) for supplying power to the components. Preferably, the power supply may be logically connected to the processor 170 by using a power management system, thereby implementing functions such as charging management, discharging management, and power consumption management by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of the methods described below may be applied to the terminal 100 shown in FIG. 3.

The following describes a product form of the server 200 in FIG. 2.

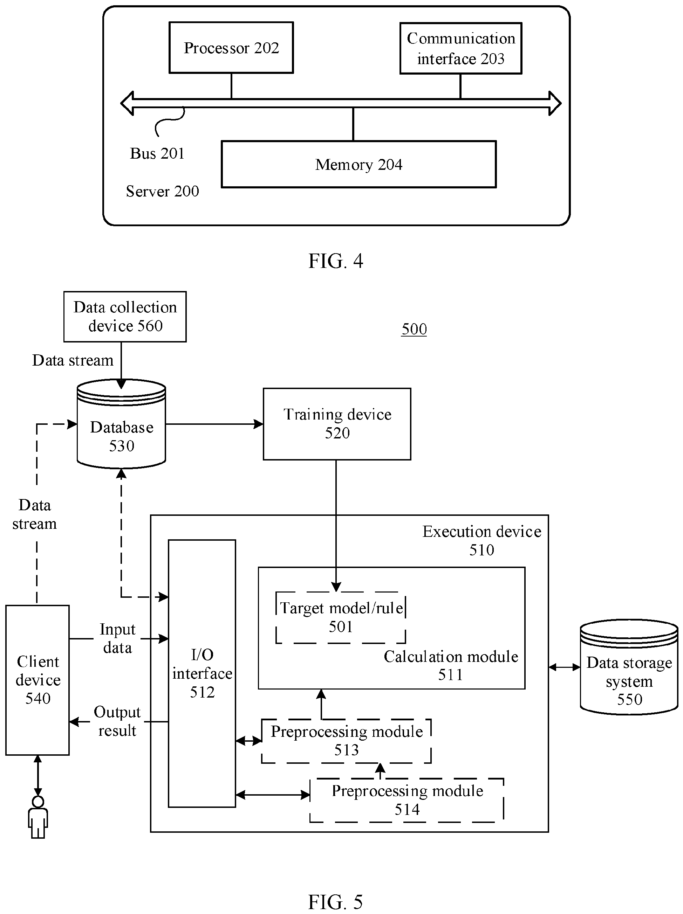

FIG. 4 provides a diagram of a structure of a server 200. As shown in FIG. 4, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 4, but this does not mean that there is only one bus or only one type of bus.

The processor 202 may be any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a mechanical hard disk drive (hard drive drive, HDD), or a solid state drive (solid state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be centralized or distributed devices. The processor (for example, the processor 170 and the processor 202) in the terminal 100 and the server 200 may be a hardware circuit (for example, an application-specific integrated circuit (application-specific integrated circuit, ASIC), a field-programmable gate array (field-programmable gate array, FPGA), a general-purpose processor, a digital signal processor (digital signal processing, DSP), a microprocessor, or a microcontroller), or a combination of hardware circuits. For example, the processor may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The following describes in detail a system architecture provided in embodiments of this application with reference to FIG. 5.

FIG. 5 is a diagram of a system architecture according to an embodiment of this application. As shown in FIG. 5, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the foregoing terminal device or server that runs a character motion capture application.

The data collection device 560 is configured to collect a training sample. The training sample may be an image or a video, an annotation (for example, two-dimensional projection information) of a character in the image or the video, and the like. After collecting the training sample, the data collection device 560 stores the training sample in the database 530.

The training device 520 may train a to-be-trained neural network (for example, the second pose recognition model in embodiments of this application) based on the maintained training sample in the database 530, to obtain the target model/rule 501.

It should be noted that in actual application, the training sample maintained in the database 530 is not necessarily collected by the data collection device 560, and may be received from another device. In addition, it should be noted that the training device 520 may not train the target model/rule 501 completely based on the training sample maintained in the database 530, and may obtain the training sample from a cloud or another place to perform model training. The foregoing description should not be used as a limitation on embodiments of this application.

The target model/rule 501 obtained by the training device 520 through training may be applied to different systems or devices, for example, applied to the execution device 510 shown in FIG. 5. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 5, the input/output (input/output, I/O) interface 512 is configured for the execution device 510, and is configured to exchange data with an external device. A user may enter data (for example, an image or a video in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

In a process in which the execution device 510 preprocesses the input data or the calculation module 511 of the execution device 510 performs related processing like computing, the execution device 510 may invoke data, code, and the like in the data storage system 550 for corresponding processing; and may store, in the data storage system 550, data, instructions, and the like that are obtained through the corresponding processing.

Finally, the I/O interface 512 provides a processing result (for example, 3D pose information or information about a virtual character that is restored based on the 3D pose information) for the client device 540, to provide the processing result for the user.

In the case shown in FIG. 5, the user may manually give input data, and the "manually given input data" may be operated on an interface provided by the I/O interface 512. In another case, the client device 540 may automatically send input data to the I/O interface 512. If the client device 540 needs to obtain authorization of the user before automatically sending the input data, the user may set corresponding permission in the client device 540. The user may view, on the client device 540, a result output by the execution device 510. A specific presentation form may be a specific manner such as display, sound, or action. The client device 540 may alternatively be used as a data collection end, to collect, as new sample data, input data input to the I/O interface 512 and an output result output from the I/O interface 512 that are shown in the figure, and store the new sample data in the database 530. Certainly, the client device 540 may alternatively not perform collection. Instead, the I/O interface 512 directly stores, in the database 530 as new sample data, the input data input to the I/O interface 512 and the output result output from the I/O interface 512 that are shown in the figure.

It should be noted that FIG. 5 is only a diagram of a system architecture according to an embodiment of this application. A location relationship between a device, a component, a module, and the like shown in the figure does not constitute any limitation. For example, in FIG. 5, the data storage system 550 is an external memory relative to the execution device 510. In another case, the data storage system 550 may be alternatively disposed in the execution device 510. It should be understood that the execution device 510 may be deployed in the client device 540.

Details from a perspective of model inference are as follows:

In this embodiment of this application, the calculation module 511 in the execution device 520 may obtain the code stored in the data storage system 550, to implement steps related to a model inference process in embodiments of this application.

In this embodiment of this application, the calculation module 511 in the execution device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processing, DSP), a microprocessor, or a microcontroller), or a combination of hardware circuits. For example, the training device 520 may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

Specifically, the calculation module 511 in the execution device 520 may be a hardware system that has an instruction execution function. The steps related to the model inference process provided in embodiments of this application may be software code stored in a memory. The calculation module 511 in the execution device 520 may obtain the software code from the memory, and execute the obtained software code to implement the steps related to the model inference process provided in embodiments of this application.

It should be understood that the calculation module 511 in the execution device 520 may be a combination of a hardware system that does not have an instruction execution function and a hardware system that has an instruction execution function. Some of the steps related to the model inference process provided in embodiments of this application may be implemented by the hardware system that does not have an instruction execution function in the calculation module 511 in the execution device 520. This is not limited herein.

Details from a perspective of model training are as follows:

In this embodiment of this application, the training device 520 may obtain code stored in a memory (which is not shown in FIG. 5, and may be integrated into the training device 520 or separately deployed from the training device 520), to implement steps related to model training in embodiments of this application.

In this embodiment of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processing, DSP), a microprocessor, or a microcontroller), or a combination of hardware circuits. For example, the training device 520 may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

It should be understood that the training device 520 may be a combination of a hardware system that does not have an instruction execution function and a hardware system that has an instruction execution function. Some of the steps related to model training provided in embodiments of this application may be implemented by the hardware system that does not have an instruction execution function in the training device 520. This is not limited herein.

II. Motion capture function cloud service provided by a server

In a possible implementation, the server may provide a motion capture function service for a device side by using an application programming interface (application programming interface, API).

A terminal device may send a related parameter (for example, an image or a video that includes a human body) to the server by using the API provided by a cloud. The server may obtain a processing result (for example, 3D pose information or information about a virtual character that is restored based on the 3D pose information) based on the received parameter, and return the processing result to the terminal.

For descriptions about the terminal and the server, refer to the descriptions in the foregoing embodiments. Details are not described herein again.

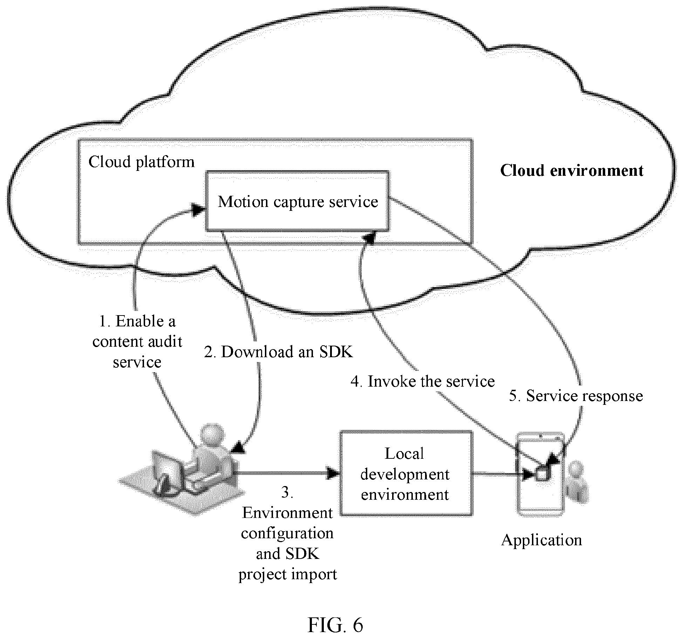

FIG. 6 shows a procedure of using a motion capture function cloud service provided by a cloud platform.

1. Enable and purchase a content audit service.

2. A user may download a software development kit (software development kit, SDK) corresponding to the content audit service. Generally, the cloud platform provides SDKs of a plurality of development versions for the user to select based on a requirement of a development environment, for example, a Java SDK, a Python SDK, a PHP SDK, and an Android SDK.

3. After locally downloading an SDK of a corresponding version based on the requirement, the user imports an SDK project to a local development environment, and performs configuration and debugging in the local development environment. Another function may be further developed in the local development environment, to form an application that integrates a capability for a motion capture function.

4. In a process of using the motion capture function application, when the motion capture function needs to be performed, invocation of an API of the motion capture function may be triggered. When the application triggers the motion capture function, an API request is initiated to a running instance of a motion capture function service in a cloud environment, where the API request carries an image or a video, and the running instance in the cloud environment processes the image or the video to obtain a processing result (for example, 3D pose information or information about a virtual character that is restored based on the 3D pose information).

5. The cloud environment returns the processing result to the application. In this way, invocation of the motion capture function service is completed once.

III. Model training cloud service provided by a server

In a possible implementation, the server may provide, based on an image or a video provided by a customer, a model of a motion capture function adapted to a character object (or a more general character) in the image or the video.

In a possible implementation, the server may provide an image information restoration service for a device side by using an application programming interface (application programming interface, API).

A terminal device may send a related parameter (for example, an image or a video) to the server by using the API provided by a cloud. The server may obtain a processing result based on the received parameter, and return the processing result (for example, a model of a motion capture function adapted to a character object (or a more general character) in the image or the video) to the terminal.

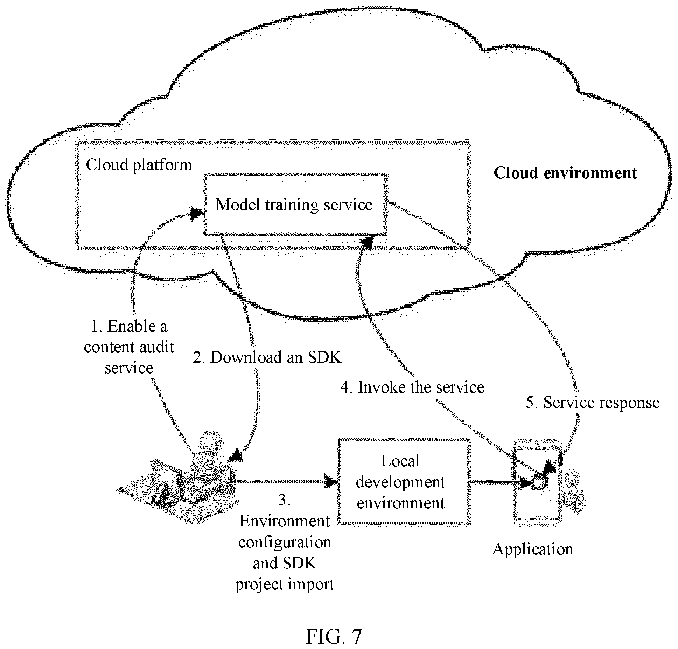

FIG. 7 shows a procedure of using a model training cloud service provided by a cloud platform.

For descriptions about the terminal and the server, refer to the descriptions in the foregoing embodiments. Details are not described herein again.

Embodiments of this application relate to massive application of a neural network. Therefore, for ease of understanding, the following first describes related terms and related concepts such as the neural network in embodiments of this application.

(1) Neural network

The neural network may include a neuron, and the neuron may be an arithmetic unit that uses $x_s$ and an intercept 1 as an input. An output of the arithmetic unit may be:

$$h_{W,b}(x) = f(W^T x) = f\left(\sum_{s=1}^{n} W_s x_s + b\right) \quad \text{(1-1)}$$

s=1, 2, ..., or n, n is a natural number greater than 1, $W_s$ is a weight of $x_s$, and $b$ is a bias of the neuron. $f$ is an activation function (activation function) of the neuron, and is used to introduce a non-linear feature into the neural network to convert an input signal in the neuron into an output signal. The output signal of the activation function may be used as an input of a next convolutional layer. The activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN) may be understood as a neural network having many hidden layers. There is no special metric standard for "many" herein. A multi-layer neural network and the deep neural network are essentially the same. The DNN is divided based on locations of different layers, and a neural network in the DNN may be divided into three types: an input layer, a hidden layer, and an output layer. Generally, a first layer is an input layer, a last layer is an output layer, and intermediate layers are all hidden layers. The layers are fully connected. To be specific, any neuron at an $i^{th}$ layer is necessarily connected to any neuron at an $(i+1)^{th}$ layer. Although the DNN seems to be very complex, work of each layer is not complex, and is briefly the following linear relational expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha(\ )$ is an activation function. At each layer, the output vector $\vec{x}$ is obtained by performing such a simple operation on the input vector $\vec{y}$. Because the DNN has a large quantity of layers, there are a large quantity of coefficients W and a large quantity of bias vectors $\vec{b}$. Specific parameters are defined in the DNN. First, a definition of the coefficient W is described. A three-layer DNN is used as an example. For example, a linear coefficient from a fourth neuron at a second layer to a second neuron at a third layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter $W$ at the input layer. In the deep neural network, more hidden layers make the network more capable of describing a complex case in the real world. Theoretically, a model with more parameters has higher complexity and a larger "capacity". This indicates that the model can complete a more complex learning task.

(3) A convolutional neural network (Convolutional Neural Network, CNN) is a deep neural network with a convolutional structure. The convolutional neural network includes a feature extractor that includes a convolutional layer and a subsampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected to only some adjacent-layer neurons. One convolutional layer usually includes several feature maps, and each feature map may include some neurons that are in a rectangular arrangement. Neurons on a same feature map share a weight, and the weight shared herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, image information obtained through same learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a matrix with a random size. In a training process of the convolutional neural network, the convolution kernel may obtain an appropriate weight through learning. In addition, benefits directly brought by weight sharing are that connections between layers of the convolutional neural network are reduced, and an overfitting risk is reduced.

(4) Back propagation algorithm

In a training process, a convolutional neural network may correct a value of a parameter in an initial super-resolution model by using an error back propagation (back propagation, BP) algorithm, so that a reconstruction error loss of the super-resolution model becomes increasingly small. Specifically, an input signal is forward transferred until the error loss is generated in an output, and the parameter in the initial super-resolution model is updated through back propagation of information about the error loss, to converge the error loss. The back propagation algorithm is an error-loss-led back propagation motion intended to obtain a parameter such as a weight matrix of an optimal super-resolution model.

(5) Loss function

In a process of training a deep neural network, because it is expected that an output of the deep neural network is maximally close to an actually desired predicted value, a current predicted value of the network may be compared with a target value that is actually desired, and then a weight vector at each layer of the neural network is updated based on a difference between the current predicted value and the target value (certainly, there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually desired or a value close to the target value that is actually desired. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A larger output value (loss) of the loss function indicates a larger difference. Therefore, training of the deep neural network is a process of minimizing the loss.

(6) Back propagation algorithm

In a training process, a neural network may correct a value of a parameter in an initial neural network model by using an error back propagation (back propagation, BP) algorithm, so that a reconstruction error loss of the neural network model becomes increasingly small. Specifically, an input signal is forward transferred until the error loss is generated in an output, and the parameter in the initial neural network model is updated through back propagation of information about the error loss, to converge the error loss. The back propagation algorithm is an error-loss-led back propagation motion intended to obtain a parameter such as a weight matrix of an optimal neural network model.

A human body motion capture technology is a common technology in the film and television industry and the game industry. The technology can process an input video stream to capture a pose of a human body in each frame of image, so as to obtain motion information of the human body. Based on this technology, pose data of a human body during motion can be extracted from massive videos, and there are wide application scenarios, for example, virtual character driving, teleconferencing, and metaverse in an augmented reality (augmented reality, AR) scenario and a virtual reality (virtual reality, VR) scenario.

Currently, human body motion capture may be implemented based on an AI technology. Specifically, for an image, the image may be processed by using a trained neural network, to obtain a pose parameter. The pose parameter may be used to determine a pose of a human body.

However, a neural network used in the conventional technology is updated based on only a loss constructed based on two-dimensional projection information. Although pixel-level alignment between a predicted pose and a pose in an image or a video can be implemented, the predicted pose may have a problem of action distortion and improperness.

To resolve the foregoing problem, embodiments of this application provide a data processing method. The following describes the data processing method in embodiments of this application in detail with reference to the accompanying drawings.

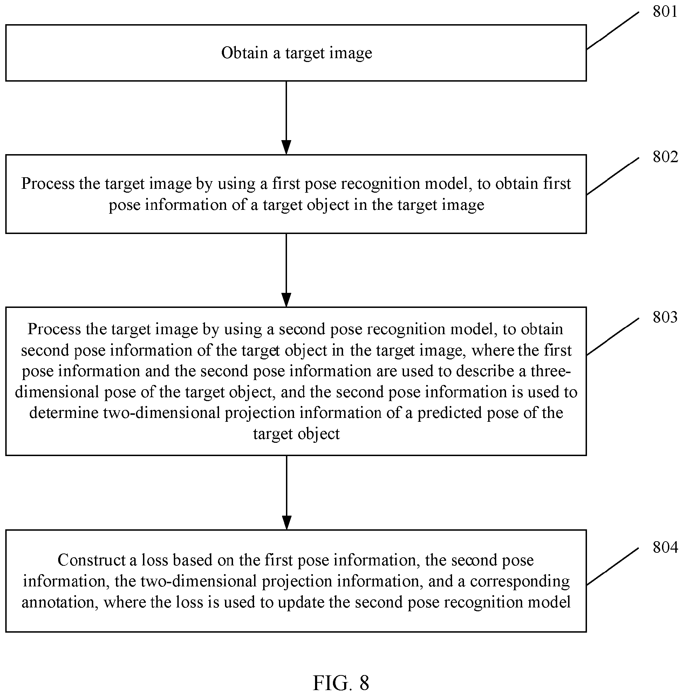

Refer to FIG. 8. FIG. 8 is a schematic flowchart of a data processing method according to an embodiment of this application. As shown in FIG. 8, the data processing method provided in this embodiment of this application may include steps 801 to 804. The following separately describes these steps in detail.

801: Obtain a target image.

In a possible implementation, a training sample needs to be obtained when a model used for character motion capture (or referred to as pose recognition) is trained. The training sample may include an image and an annotation corresponding to the image. The annotation may include two-dimensional projection information of a target object (for example, a character) in a pre-annotated target image. The annotation corresponding to the two-dimensional projection information may be a manual advance annotation, or may be obtained by processing the target image by using a pre-trained neural network.

In addition, the annotation may further include information (such as pose information and body shape information) about the target object recognized based on the target image by using the pre-trained neural network.

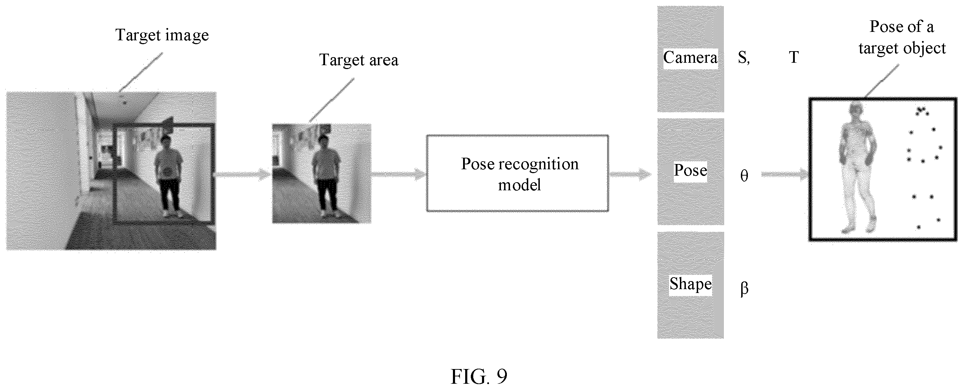

In this embodiment, the target image may be a frame of image in a video stream, or may be a separate image. The target image usually presents the target object and an environment in which the target object is located. In this case, an objective of pose recognition is to obtain a pose of the target object in the target image. For example, as shown in FIG. 9 (FIG. 9 is a diagram of an application example of pose recognition according to an embodiment of this application), content presented in the target image is a human body and an environment in which the human body is located. Therefore, the objective of pose recognition for the target image is to recognize a pose of the human body presented in the target image.

After the target image is obtained, detection processing may be performed on the target image, to determine a target area in the target image. Location information of the target area in the target image may be further obtained, and normalized.

In a possible implementation, the target object is a human body.

802: Process the target image by using a first pose recognition model, to obtain first pose information of the target object in the target image.

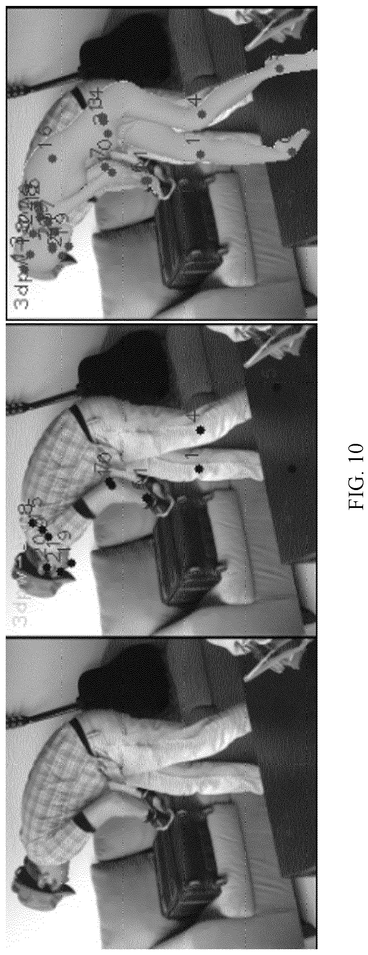

In a possible implementation, for a pose recognition model that needs to be trained, information used to describe a three-dimensional pose of the target object may usually be output in a feedforward process, two-dimensional key point optimization is performed on the information, that is, two-dimensional projection information is obtained in a specific mapping manner, and the pose recognition model is updated by using a loss constructed based on a difference between the obtained two-dimensional projection information and a corresponding annotation. In this way, pixel-level alignment can be implemented between a pose determined based on pose information output by an updated pose recognition model and a pose of a character object in an image. However, in this manner, the determined pose may be distorted or abnormal, for example, as shown in FIG. 10.

In this embodiment of this application, pose information that has no or substantially has no distortion is introduced as a supervision signal (or referred to as prior information) for training a pose recognition model, to ensure that pixel-level alignment can be implemented between a pose determined based on pose information output by an updated pose recognition model and a pose of a character object in an image, and the determined pose has no distortion (or substantially has no distortion).

In a possible implementation, the foregoing introduced supervision signal (or referred to as prior information) may be provided by the first pose recognition model.

In a possible implementation, the first pose recognition model is obtained through training based on a loss constructed based on output pose information and a corresponding annotation.

The first pose recognition model may obtain the pose information of the target object in the target image in an end-to-end manner by processing the image. A pose parameter usually includes two parts of parameters. One part of the parameters indicates a rotation angle of the target object relative to a camera, and the other part of the parameters indicates an included angle between joints of the target object. Optionally, the other part of the parameters may further indicate a location of a three-dimensional coordinate point on the target object.

In a possible implementation, the first pose information may be used to describe the three-dimensional pose of the target object, for example, may indicate the included angle between the joints of the target object, or indicate the location of the three-dimensional coordinate point on the target object.

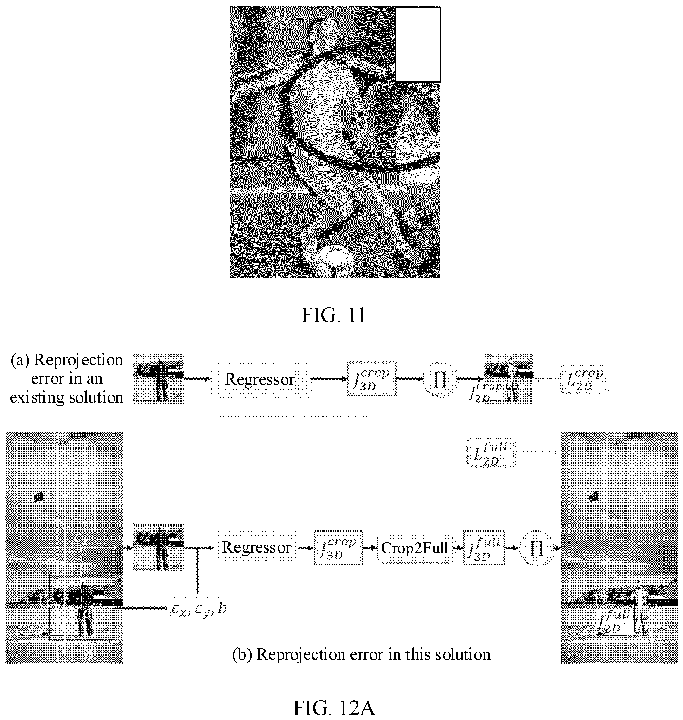

In a process of training the first pose recognition model, a loss may be directly constructed based on a difference between the pose information output by the first pose recognition model by processing the image and a corresponding annotation (that is, a true value of the pose information), so that the first pose recognition model may have a capability of recognizing relatively good pose information, and a pose determined based on the pose information obtained by the first pose recognition model is proper and has no distortion (herein, "no distortion" may be understood as an action that can be performed by a normal human body). Certainly, the pose information output by the first pose recognition model is used to describe the three-dimensional pose of the target object, and in a training process, two-dimensional optimization processing (for example, 2D key point optimization) is not performed on the pose information. Therefore, a finally determined pose may not be strictly aligned with a character pose in the image, for example, as shown in FIG. 11.

In a possible implementation, the target image may be processed by using the first pose recognition model, to obtain the first pose information of the target object in the target image.

In a possible implementation, first body shape information of the target object in the target image may be further obtained by processing the target image by using the first pose recognition model (optionally, a displacement parameter may be further output).

The first body shape information may also be referred to as a shape (shape) parameter, and indicate a three-dimensional shape of the target object. The displacement parameter indicates an amplitude occupied by the target object in the target area, and an offset of the target object in the target area (for example, a degree of a left offset or a degree of a right offset of the target object in a case that a center point of the target area is used as a reference point).

In a process of performing model inference by using the first pose recognition model, the pose of the target object may be obtained based on the first pose information, the shape parameter, and the displacement parameter that are output by the first pose recognition model. The pose of the target object may be represented by using a plurality of three-dimensional key points (3D key points) of the target object. These three-dimensional key points may describe an orientation of the target object in a camera coordinate system (that is, an orientation of the target object relative to the camera) and a body behavior of the target object in the camera coordinate system (that is, an action of the target object in three-dimensional space), where an origin of the camera coordinate system is the camera that shoots the target image. Still refer to the foregoing example. As shown in FIG. 9, after the pose recognition model outputs first pose information $\theta$, a shape parameter $\beta$, and displacement parameters S and T, calculation may be performed on these parameters to obtain a plurality of 3D key points of the target object. These 3D key points are combined together, to present the orientation of the target object in the camera coordinate system and the body behavior of the target object in the camera coordinate system.

Optionally, to reduce a calculation amount of the first pose recognition model, the target image may be preprocessed. Specifically, the target image may be detected, to determine an area in which the target object is located in the target image. The area may be referred to as a target area (or may be referred to as a detection box). Still refer to the foregoing example. After an area in which the human body is located in the target image is detected, the area in which the human body is located may be determined as the target area (that is, an area enclosed by a box in FIG. 9).

Further, location information of the target area in the target image may be further obtained. The location information may have a plurality of cases: (1) The location information of the target area in the target image includes coordinates of a center point of the target area in an image coordinate system and a size of the target area, and the image coordinate system is constructed based on the target image. Specifically, a vertex of the target image (for example, an upper-left vertex of the target image) may be used as an origin of the image coordinate system. In this case, the coordinates of the center point of the target area in the image coordinate system, and a length and a width of the target area may be determined (this is equivalent to obtaining a size of the target area). Such information may indicate a location of the target area in the target image. (2) The location information of the target area in the target image includes coordinates of a vertex of the target area in an image coordinate system, and the image coordinate system is constructed based on the target image. Specifically, a vertex of the target image (for example, an upper-left vertex of the target image) may be used as an origin of the image coordinate system. In this case, coordinates of all vertices of the target area in the image coordinate system may be determined. Such information may indicate a location of the target area in the target image and the like.

Further, after the location information of the target area in the target image is obtained, normalization processing may be further performed on the location information, to obtain normalized location information of the target area in the target image. Specifically, assuming that the location information of the target area in the target image is I, and the normalized location information of the target area in the target image is I', I'=(I-mean(I))/F, and F=sqrt(w×w+h×h), where mean(I) is a mean value of the target area, w is the width of the target area, h is the length of the target area, and F may represent a focal length. In an implementation, F may be obtained through calculation by using the foregoing formula. In another implementation, F may be directly obtained from a parameter of the camera that shoots the image. In this way, after the normalized information is obtained, a subsequent pose recognition operation of the model is facilitated.

After the target area and the normalized location information of the target area in the target image are obtained, the target area and the normalized location information of the target area in the target image may be input into the first pose recognition model (which is a trained neural network), to process (for example, perform a series of operations such as feature extraction) the target area in the target image and the normalized location information of the target area in the target image by using the first pose recognition model, to obtain the first pose information.

The first pose information may be used as a prior constraint $\hat{\theta}$ for model training.

$$\hat{\theta} = \bar{\mathcal{H}}(I)$$

Herein, I is the target image.

803: Process the target image by using a second pose recognition model, to obtain second pose information of the target object in the target image, where the first pose information and the second pose information are used to describe the three-dimensional pose of the target object, and the second pose information is used to determine two-dimensional projection information of a predicted pose of the target object.

The second pose recognition model is a model that needs to be trained. In a feedforward process, the target image may be processed by using the second pose recognition model, to obtain the second pose information of the target object in the target image. A network structure of the second pose recognition model may be consistent with or similar to a network structure of the first pose recognition model. Different from that of the first pose recognition model, a loss during training of the second pose recognition model further includes two-dimensional projection information obtained by performing 2D key point optimization on the second pose information output by the second pose recognition model, and a difference between the two-dimensional projection information and a corresponding annotation value.

In a possible implementation, the two-dimensional projection information may include a 2D result such as a 2D key point, part segmentation, or dense key point estimation of the target object in the target image.

804: Construct a loss based on the first pose information, the second pose information, the two-dimensional projection information, and a corresponding annotation, where the loss is used to update the second pose recognition model.

In a possible implementation, an output of the feedforward process during training of the second pose recognition model may be the second pose information and the two-dimensional projection information obtained based on the second pose information. Correspondingly, the first pose information may be used as a supervision signal of the second pose information, and the annotation corresponding to the two-dimensional projection information may be used as a supervision signal of the two-dimensional projection information, to construct the loss.

In a possible implementation, the loss may be constructed based on (a difference between) the first pose information and the second pose information and (a difference between) the two-dimensional projection information and the corresponding annotation, where the loss is used to update the second pose recognition model.

In a possible implementation, information output by the first pose recognition model may further include the first body shape information, and the loss may be constructed based on the first body shape information and a corresponding supervision signal (second body shape information). In other words, the loss may include the difference between the first pose information and the second pose information, a difference between the first body shape information and the corresponding supervision signal (second body shape information), and the difference between the two-dimensional projection information and the corresponding annotation.

For example, the loss may be:

$$\mathcal{L} = \lambda_{2D} \left\| J_{2D} - \hat{J}_{2D} \right\| + \lambda_{\Theta} \left\| \Theta - \hat{\Theta} \right\|$$

Herein, $J_{2D} - \hat{J}_{2D}$ represents the difference between the two-dimensional projection information and the corresponding annotation, and $\Theta - \hat{\Theta}$ may represent the difference between the first pose information and the second pose information (optionally, the difference between the first body shape information and the corresponding supervision signal (second body shape information) may be further included). Although the prior information $\hat{\Theta}$ is not very accurate, the prior information can still follow a true and proper estimated distribution.

Then, a model parameter of a to-be-trained model (that is, the second pose recognition model in this embodiment of this application) may be updated based on the loss, and the to-be-trained model with an updated parameter is trained by using a next batch of training samples, until a model training condition is met (for example, a target loss converges, or a quantity of training iterations reaches a preset quantity of times).

In the foregoing manner, a 2D prediction result is used as weak supervision information, and an inference result of a prior model (the first pose recognition model) is used as a constraint, to finely tune an inference model (the second pose recognition model) on a target video, to obtain a final finely tuned model.

In a possible implementation, the target image is an image area in which the target object is located in an original image. During calculation of the two-dimensional projection information, the two-dimensional projection information is represented as a location of a two-dimensional projection of the predicted pose in the original image. In other words, a reprojection error may be calculated on the full image, and this is closer to a projection process during image formation.

For details, refer to FIG. 12A. (a) in FIG. 12A is an existing reprojection error calculation method, and (b) in FIG. 12A is a reprojection error calculation method provided in this application.

Optionally, an example of a conversion formula for converting a weak perspective projection of a cropped image to a perspective projection of a full image may be:

$$t_X^{full} = t_x + \frac{2 \cdot c_x}{b \cdot s},$$

$$t_Y^{full} = t_y + \frac{2 \cdot c_y}{b \cdot s},$$

$$t_Z^{full} = \frac{2 \cdot f_{CLIFF}}{b \cdot s},$$

It should be understood that, if the target image is a frame of image in a video stream, for another frame of image in the video stream, an operation similar to that performed on the target image may also be performed, to obtain a plurality of consecutive poses of the target object and form motion information of the target object, so as to meet various application requirements of the user.

In a possible implementation, after the updated second pose recognition model is obtained in the foregoing manner, the target image may be processed by using the updated second pose recognition model, to obtain the third pose information of the target object in the target image, where the third pose information is used to determine the pose of the target object. Similarly, for another frame of image in a video stream, an operation similar to that performed on the target image may also be performed, to obtain a plurality of consecutive poses of the target object and form motion information of the target object.

In a possible implementation, after the third pose information is obtained, the pose that is of the target object and that is obtained by processing the target image by using the updated second pose recognition model may be sent to user equipment; or the updated second pose recognition model may be sent to user equipment.

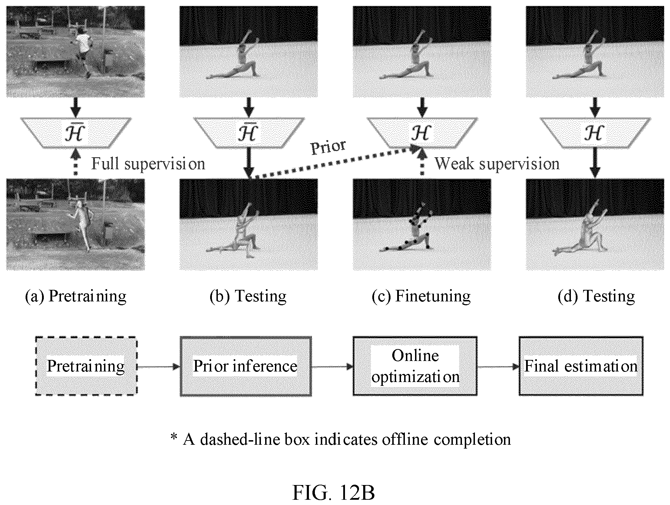

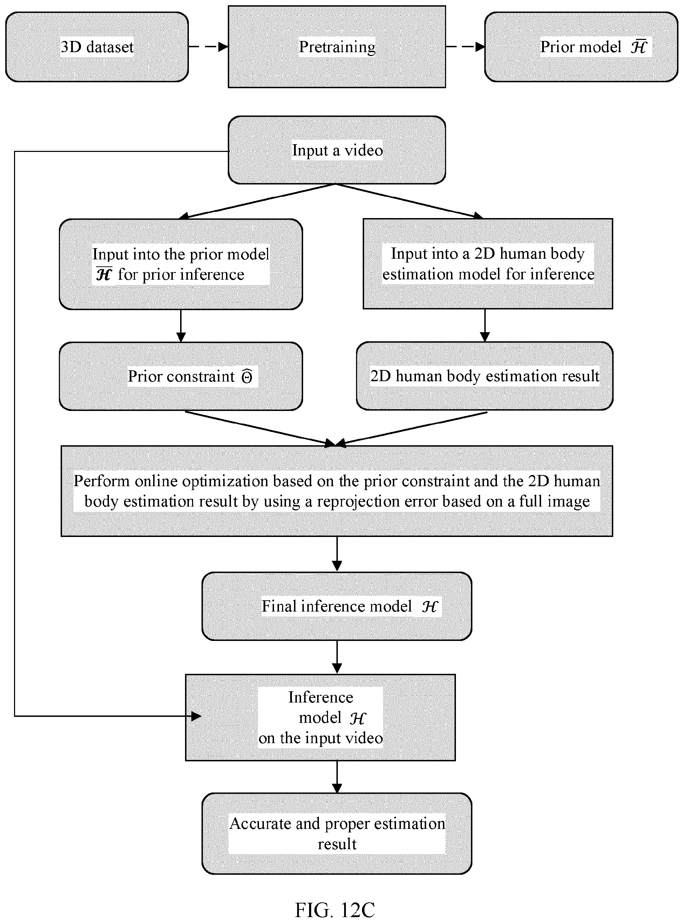

FIG. 12B and FIG. 12C each are a specific diagram of a data processing method according to this application. A prior model in FIG. 12C may be the first pose recognition model, a 2D human body estimation model is the second pose recognition model and subsequent two-dimensional projection mapping, and an inference model is the updated second pose recognition model.

An embodiment of this application provides a data processing method, including: obtaining a target image; processing the target image by using a first pose recognition model, to obtain first pose information of a target object in the target image; processing the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object; and constructing a loss based on the first pose information, the second pose information, the two-dimensional projection information, and a corresponding annotation, where the loss is used to update the second pose recognition model.

For a pose recognition model that needs to be trained, information used to describe the three-dimensional pose of the target object may usually be output in a feedforward process, two-dimensional key point optimization is performed on the information, that is, two-dimensional projection information is obtained in a specific mapping manner, and the pose recognition model is updated by using a loss constructed based on a difference between the obtained two-dimensional projection information and a corresponding annotation. In this way, pixel-level alignment can be implemented between a pose determined based on pose information output by an updated pose recognition model and a pose of a character object in an image. However, in this manner, the determined pose may be distorted or abnormal. In this embodiment of this application, pose information that has no or substantially has no distortion is introduced as a supervision signal (or referred to as prior information, that is, the first pose information) for training a pose recognition model, to ensure that pixel-level alignment can be implemented between a pose determined based on pose information output by an updated pose recognition model and a pose of a character object in an image, and the determined pose has no distortion (or substantially has no distortion).

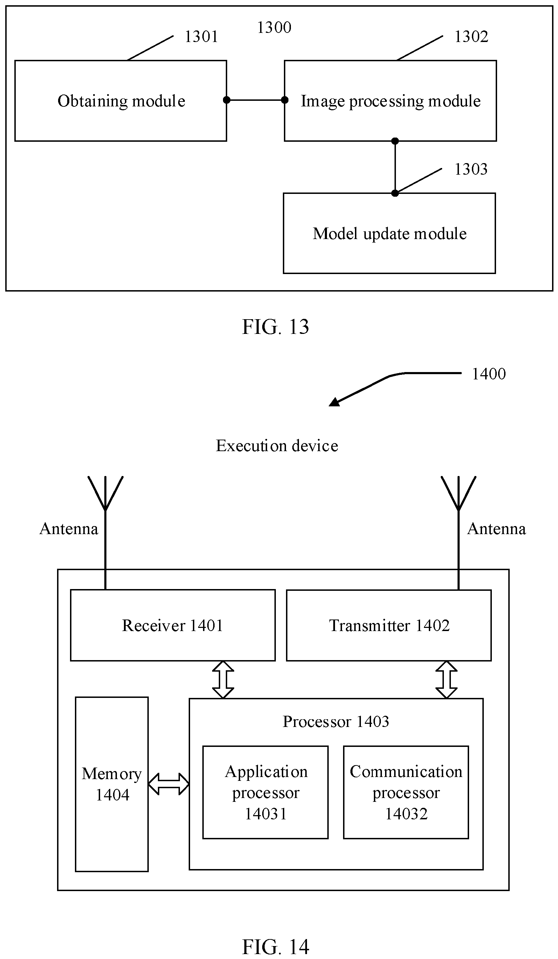

Refer to FIG. 13. FIG. 13 is a diagram of a structure of a data processing apparatus according to an embodiment of this application. As shown in FIG. 13, the data processing apparatus 1300 provided in this embodiment of this application includes the following.

An obtaining module 1301 is configured to obtain a target image.

For specific descriptions of the obtaining module 1301, refer to the descriptions of step 801 in the foregoing embodiments. Details are not described herein again.

An image processing module 1302 is configured to process the target image by using a first pose recognition model, to obtain first pose information of a target object in the target image; and

process the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object.

For specific descriptions of the image processing module 1302, refer to the descriptions of steps 802 and 803 in the foregoing embodiments. Details are not described herein again.

A model update module 1303 is configured to construct a loss based on the first pose information, the second pose information, the two-dimensional projection information, and a corresponding annotation, where the loss is used to update the second pose recognition model.

For specific descriptions of the model update module 1303, refer to the descriptions of step 804 in the foregoing embodiments. Details are not described herein again.

In a possible implementation, the first pose recognition model is obtained through training based on a loss constructed based on output pose information and a corresponding annotation.

In a possible implementation, first body shape information of the target object in the target image is further obtained by processing the target image by using the first pose recognition model;

second body shape information of the target object in the target image is further obtained by processing the target image by using the second pose recognition model; and
the model update module is specifically configured to:
construct the loss based on the first pose information, the second pose information, the key point location information, the corresponding annotation value, the first body shape information, and the second body shape information.

In a possible implementation, the target image is an image area in which the target object is located in an original image. During calculation of the two-dimensional projection information, the two-dimensional projection information is represented as a location of a two-dimensional projection of the predicted pose in the original image. In other words, a reprojection error may be calculated on the full image, and this is closer to a projection process during image formation.

In a possible implementation, the target object is a character.

In a possible implementation, the image processing module is further configured to:

process the target image by using an updated second pose recognition model, to obtain third pose information of the target object in the target image, where the third pose information is used to determine a pose of the target object.

In a possible implementation, the apparatus further includes:

a sending module, configured to send, to user equipment, the pose that is of the target object and that is obtained by processing the target image by using the updated second pose recognition model; or

send the updated second pose recognition model to user equipment.

The following describes an execution device provided in embodiments of this application. Refer to FIG. 14. FIG. 14 is a diagram of a structure of an execution device according to an embodiment of this application. The execution device 1400 may be specifically represented as a virtual reality VR device, a mobile phone, a tablet, a notebook computer, an intelligent wearable device, a monitoring data processing device, a server, or the like. This is not limited herein. Specifically, the execution device 1400 includes: a receiver 1401, a transmitter 1402, a processor 1403, and a memory 1404 (there may be one or more processors 1403 in the execution device 1400, and one processor is used as an example in FIG. 14). The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores operation instructions of the processor, an executable module or a data structure, a subset thereof, or an extended set thereof. The operation instructions may include various operation instructions used to implement various operations.

The processor 1403 controls an operation of the execution device. In specific application, components of the training device are coupled together through a bus system. In addition to a data bus, the bus system may further include a power bus, a control bus, a status signal bus, and the like. However, for clear description, various buses are referred to as the bus system in the figure.

The method disclosed in embodiments of this application may be applied to the processor 1403, or implemented by the processor 1403. The processor 1403 may be an integrated circuit chip and has a signal processing capability. In an implementation process, steps of the foregoing method may be completed by using an integrated logic circuit of hardware in the processor 1403 or instructions in a form of software. The processor 1403 may be a general-purpose processor, a digital signal processor (digital signal processing, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1404. The processor 1403 reads information in the memory 1404, and completes the steps related a model inference process in the foregoing methods in combination with hardware of the processor 1403.

The receiver 1401 may be configured to: receive input digit or character information, and generate a signal input related to a related setting and function control of the execution device. The transmitter 1402 may be configured to output digit or character information through a first interface. The transmitter 1402 may be further configured to send instructions to a disk group through the first interface, to modify data in the disk group. The transmitter 1402 may further include a display device like a display.

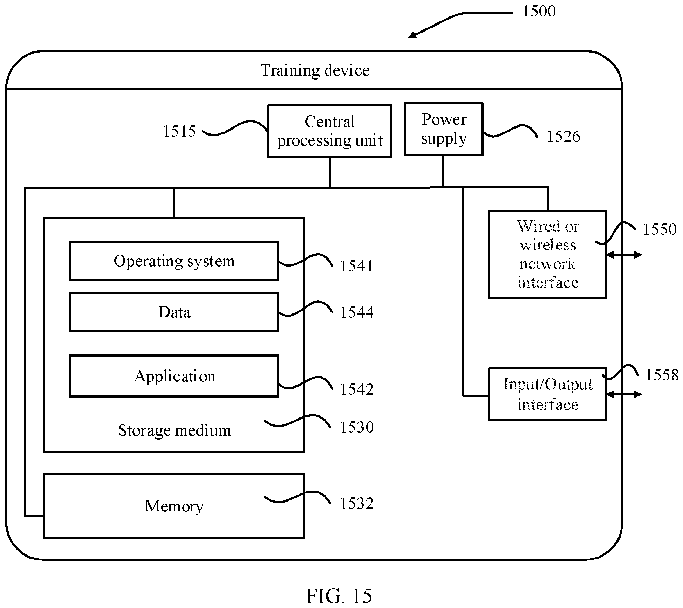

An embodiment of this application further provides a training device. Refer to FIG. 15. FIG. 15 is a diagram of a structure of a training device according to an embodiment of this application. Specifically, the training device 1500 is implemented by one or more servers, the training device 1500 may vary greatly with configuration or performance, and may include one or more central processing units (central processing units, CPU) 1515 (for example, one or more processors), a memory 1532, and one or more storage media 1530 (for example, one or more mass storage devices) that store an application 1542 or data 1544. The memory 1532 and the storage medium 1530 may be transitory storage or persistent storage. The program stored in the storage medium 1530 may include one or more modules (not shown in the figure), and each module may include a series of instruction operations for a training device. Further, the central processing unit 1515 may be configured to communicate with the storage medium 1530, and perform, on the training device 1500, the series of instruction operations in the storage medium 1530.

The training device 1500 may further include one or more power supplies 1526, one or more wired or wireless network interfaces 1550, one or more input/output interfaces 1558, or one or more operating systems 1541, such as Windows ServerTM, Mac OS XTM, UnixTM, LinuxTM, and FreeBSDTM.

In this embodiment of this application, the central processing unit 1515 is configured to perform an action related to model training in the foregoing embodiments.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program is run on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

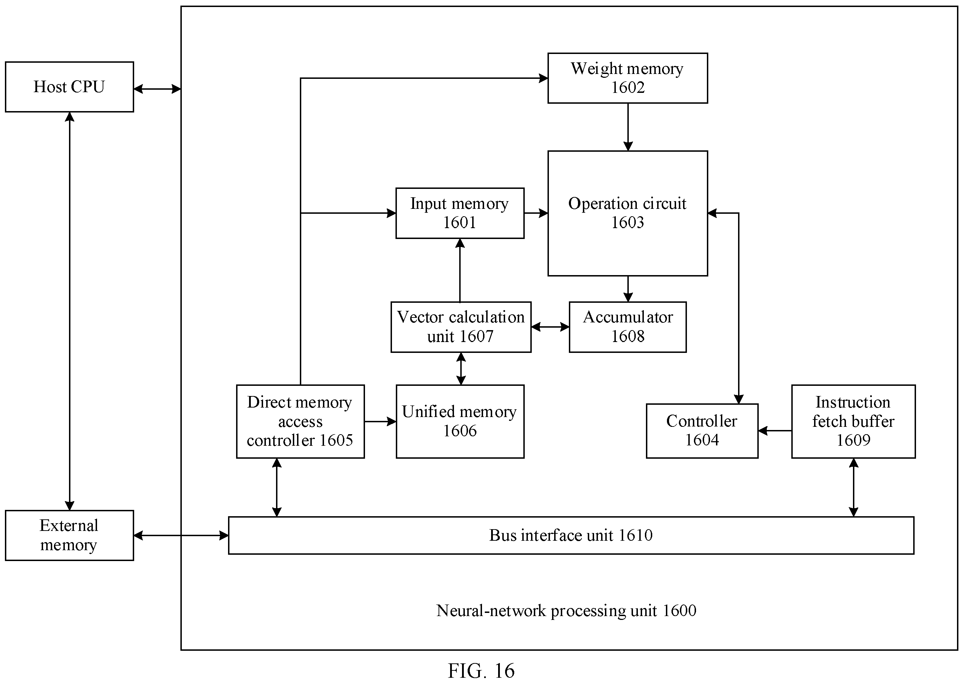

Specifically, refer to FIG. 16. FIG. 16 is a diagram of a structure of a chip according to an embodiment of this application. The chip may be represented as a neural-network processing unit NPU 1600. The NPU 1600 is mounted to a host CPU (Host CPU) as a coprocessor, and the host CPU allocates a task. A core part of the NPU is an operation circuit 1603. The operation circuit 1603 is controlled by a controller 1604 to extract matrix data in a memory and perform a multiplication operation.

In some implementations, the operation circuit 1603 includes a plurality of processing units (Process Engine, PE). In some implementations, the operation circuit 1603 is a two-dimensional systolic array. The operation circuit 1603 may alternatively be a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602, and buffers the data on each PE in the operation circuit. The operation circuit fetches data of the matrix A from an input memory 1601, performs a matrix operation on the data of the matrix A and the matrix B, to obtain a partial result or a final result of the matrix, and stores the result in an accumulator (accumulator) 1608.

A unified memory 1606 is configured to store input data and output data. Weight data is directly transferred to the weight memory 1602 by using a direct memory access controller DMAC (Direct Memory Access Controller, DMAC) 1605. The input data is also transferred to the unified memory 1606 by using the DMAC.

A BIU is a bus interface unit, namely, a bus interface unit 1610, and is used for interaction between an AXI bus and each of the DMAC and an instruction fetch buffer (Instruction Fetch Buffer, IFB) 1609.

The bus interface unit (Bus Interface Unit, BIU for short) 1610 is used by the instruction fetch buffer 1609 to obtain instructions from an external memory, and is further used by the direct memory access controller 1605 to obtain original data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector calculation unit 1607 includes a plurality of operation processing units. When necessary, further processing is performed on an output of the operation circuit 1603, such as vector multiplication, vector addition, an exponential operation, a logarithmic operation, and size comparison. The vector calculation unit is mainly configured to perform network calculation at a non-convolutional/fully connected layer in a neural network, for example, batch normalization (batch normalization), pixel-level summation, and upsampling on a feature map.

In some implementations, the vector calculation unit 1607 can store a processed output vector in the unified memory 1606. For example, the vector calculation unit 1607 may apply a linear function or a non-linear function to the output of the operation circuit 1603, for example, perform linear interpolation on a feature map extracted at a convolutional layer, and for another example, accumulate vectors of values to generate an activation value. In some implementations, the vector calculation unit 1607 generates a normalized value, a pixel-level sum, or both. In some implementations, the processed output vector can be used as an activation input of the operation circuit 1603, for example, used at a subsequent layer in the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private for a hardware architecture of the NPU.

The processor mentioned anywhere above may be a general-purpose central processing unit, a microprocessor, an ASIC, or one or more integrated circuits configured to control the foregoing program execution.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, comprising:

   obtaining a target image;
   processing the target image by using a first pose recognition model, to obtain first pose information of a target object in the target image;
   processing the target image by using a second pose recognition model, to obtain second pose information of the target object in the target image, wherein the first pose information and the second pose information are used to describe a three-dimensional pose of the target object, and the second pose information is used to determine two-dimensional projection information of a predicted pose of the target object; and
   constructing a loss based on the first pose information, the second pose information, the two-dimensional projection information, and a corresponding annotation, wherein the loss is used to update the second pose recognition model.

2. The method according to claim 1, wherein the first pose recognition model is obtained through training based on a loss constructed based on output pose information and a corresponding annotation.

3. The method according to claim 1 or 2, wherein

   first body shape information of the target object in the target image is further obtained by processing the target image by using the first pose recognition model;
   second body shape information of the target object in the target image is further obtained by processing the target image by using the second pose recognition model; and
   the constructing a loss based on the first pose information, the second pose information, the key point location information, and a corresponding annotation value comprises:
   constructing the loss based on the first pose information, the second pose information, the key point location information, the corresponding annotation value, the first body shape information, and the second body shape information.

4. The method according to any one of claims 1 to 3, wherein the target image is an image area in which the target object is located in an original image, and the two-dimensional projection information is represented as a location of a two-dimensional projection of the predicted pose in the original image.

5. The method according to any one of claims 1 to 4, wherein the target object is a character.

6. The method according to any one of claims 1 to 5, wherein the method further comprises:
   processing the target image by using an updated second pose recognition model, to obtain third pose information of the target object in the target image, wherein the third pose information is used to determine a pose of the target object.

7. The method according to any one of claims 1 to 6, wherein the method further comprises:

   sending, to user equipment, the pose that is of the target object and that is obtained by processing the target image by using the updated second pose recognition model; or
   sending the updated second pose recognition model to user equipment.

8. The method according to any one of claims 1 to 7, wherein the annotation is a manual advance annotation, or is obtained by processing the target image by using a pre-trained model.

9. A data processing apparatus, comprising:

   an obtaining module, configured to obtain a target image;
   an image processing module, configured to process the target image by using a first pose recognition model, to obtain first pose information of a target object in the target image; and
   process the target image by using a second pose recognition model, to obtain second pose information of the target object in the target image, wherein the first pose information and the second pose information are used to describe a three-dimensional pose of the target object, and the second pose information is used to determine two-dimensional projection information of a predicted pose of the target object; and
   a model update module, configured to construct a loss based on the first pose information, the second pose information, the two-dimensional projection information, and a corresponding annotation, wherein the loss is used to update the second pose recognition model.

10. The apparatus according to claim 9, wherein the first pose recognition model is obtained through training based on a loss constructed based on output pose information and a corresponding annotation.

11. The apparatus according to claim 9 or 10, wherein

    first body shape information of the target object in the target image is further obtained by processing the target image by using the first pose recognition model;
    second body shape information of the target object in the target image is further obtained by processing the target image by using the second pose recognition model; and
    the model update module is specifically configured to:
    construct the loss based on the first pose information, the second pose information, the key point location information, the corresponding annotation value, the first body shape information, and the second body shape information.

12. The apparatus according to any one of claims 9 to 11, wherein the target image is an image area in which the target object is located in an original image, and the two-dimensional projection information is represented as a location of a two-dimensional projection of the predicted pose in the original image.

13. The apparatus according to any one of claims 9 to 12, wherein the target object is a character.

14. The apparatus according to any one of claims 9 to 13, wherein the image processing module is further configured to: process the target image by using an updated second pose recognition model, to obtain third pose information of the target object in the target image, wherein the third pose information is used to determine a pose of the target object.

15. The apparatus according to any one of claims 9 to 14, wherein the apparatus further comprises:

a sending module, configured to send, to user equipment, the pose that is of the target object and that is obtained by processing the target image by using the updated second pose recognition model; or
send the updated second pose recognition model to user equipment.

16. A computer storage medium, wherein the computer storage medium stores one or more instructions, and when the instructions are executed by one or more computers, the one or more computers are enabled to perform an operation in the method according to any one of claims 1 to 8.

17. A computer program product, comprising computer-readable instructions, wherein when the computer-readable instructions are run on a computer device, the computer device is enabled to perform the method according to any one of claims 1 to 8.

18. A system, comprising at least one processor and at least one memory, wherein the processor and the memory are connected and communicate with each other through a communication bus;

the at least one memory is configured to store code; and
the at least one processor is configured to execute the code to perform the method according to any one of claims 1 to 8.

Intelligent information chain

IT value chain

Intelligent product and industry application

Translation/text analysis/...

Speech/vision/image/...

Data processing:

Data training/machine learning/ deep learning

Search/inference/ decision-making

...

Data

Infrastructure

Sensor

Intelligent chip

Basic platform

...

FIG. 1A

102

101

103

Parameter ⟶ Motion capture application ⟶ 3D pose information

FIG. 1B

Parameter ⟶

Processing result ⟵

Terminal 100                    Server 200

FIG. 2

Terminal 100

FIG. 3

Processor 202

Communication interface 203

Bus 201

Memory 204

Server 200

FIG. 4

Data collection device 560

500

Data stream

Database 530

Training device 520

Data stream

Execution device 510

Input data

I/O interface 512

Target model/rule 501

Calculation module 511

Data storage system 550

Client device 540

Output result

Preprocessing module 513

Preprocessing module 514

FIG. 5

Cloud platform

**Cloud environment**

Motion capture service

1. Enable a content audit service

2. Download an SDK

4. Invoke the service

5. Service response

3. Environment configuration and SDK project import

Local development environment

Application

FIG. 6

FIG. 7

Obtain a target image — 801

Process the target image by using a first pose recognition model, to obtain first pose information of a target object in the target image — 802

Process the target image by using a second pose recognition model, to obtain second pose information of the target object in the target image, where the first pose information and the second pose information are used to describe a three-dimensional pose of the target object, and the second pose information is used to determine two-dimensional projection information of a predicted pose of the target object — 803

Construct a loss based on the first pose information, the second pose information, the two-dimensional projection information, and a corresponding annotation, where the loss is used to update the second pose recognition model — 804

FIG. 8

Target image

Target area

Pose recognition model

Camera S, T

Pose θ

Shape β

Pose of a target object

FIG. 9

EP 4 546 292 A1

FIG. 10

FIG. 11

(a) Reprojection error in an existing solution

(b) Reprojection error in this solution

FIG. 12A

(a) Pretraining  (b) Testing  (c) Finetuning  (d) Testing

* A dashed-line box indicates offline completion

FIG. 12B

```
┌──────────────┐      ┌──────────────┐      ┌──────────────────┐
│   3D dataset │ --▶  │  Pretraining │ --▶  │ Prior model  𝓗̄ │
└──────────────┘      └──────────────┘      └──────────────────┘
```

```
                    ┌──────────────┐
                    │ Input a video│
                    └──────────────┘
```

```
┌───────────────────────┐        ┌───────────────────────┐
│ Input into the prior  │        │ Input into a 2D human │
│ model 𝓗̄ for prior     │        │ body estimation model │
│ inference             │        │ for inference         │
└───────────────────────┘        └───────────────────────┘
```

```
┌───────────────────────┐        ┌───────────────────────┐
│ Prior constraint  Θ̂   │        │ 2D human body         │
│                       │        │ estimation result     │
└───────────────────────┘        └───────────────────────┘
```

```
┌────────────────────────────────────────────────────────────────┐
│ Perform online optimization based on the prior constraint and   │
│ the 2D human body estimation result by using a reprojection     │
│ error based on a full image                                     │
└────────────────────────────────────────────────────────────────┘
```

```
            ┌────────────────────────────┐
            │ Final inference model  𝓗    │
            └────────────────────────────┘
```

```
            ┌────────────────────────────┐
            │        Inference           │
            │        model 𝓗             │
            │   on the input video       │
            └────────────────────────────┘
```

```
            ┌────────────────────────────┐
            │ Accurate and proper        │
            │ estimation result          │
            └────────────────────────────┘
```

FIG. 12C

1300

1301

Obtaining module

1302

Image processing module

1303

Model update module

FIG. 13

1400

Execution device

Antenna

Antenna

Receiver 1401

Transmitter 1402

Processor 1403

Memory 1404

Application processor 14031

Communication processor 14032

FIG. 14

1500

Training device

1515 —— Central processing unit    Power supply ——  1526

Operating system ——  1541

Data ——  1544

Application ——  1542

Storage medium ——  1530

Memory ——  1532

Wired or wireless network interface ——  1550

Input/Output interface ——  1558

FIG. 15

FIG. 16

## INTERNATIONAL SEARCH REPORT

| International application No. |
|---|
| **PCT/CN2023/108089** |

**A.    CLASSIFICATION OF SUBJECT MATTER**

G06V20/64(2022.01)i;  G06V40/20(2022.01)i

According to International Patent Classification (IPC) or to both national classification and IPC

**B.    FIELDS SEARCHED**

Minimum documentation searched (classification system followed by classification symbols)

IPC：G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 图像, 姿态识别, 二维投影, 关键点, 三维姿态, 损失, 模型, 先验, image, Pose Estimat+, 2D projection, keypoint, 3D Pose, loss, model, prior term+, prior information+

**C.    DOCUMENTS CONSIDERED TO BE RELEVANT**

| Category* | Citation of document, with indication, where appropriate, of the relevant passages | Relevant to claim No. |
|---|---|---|
| PX | CN 115376203 A (HUAWEI TECHNOLOGIES CO., LTD.) 22 November 2022 (2022-11-22) claims 1-18 | 1-18 |
| X | Hanbyul Joo et al. "Exemplar Fine-Tuning for 3D Human Model Fitting Towards In-the-Wild 3D Human Pose Estimation" *arXiv*, 22 October 2021 (2021-10-22), section 3 | 1-18 |
| X | Federica Bogo et al. "Keep it SMPL: Automatic Estimation of 3D Human Pose and Shape from a Single Image" *arXiv*, 27 July 2016 (2016-07-27), section 3 | 1-18 |
| A | CN 114120436 A (HUAWEI CLOUD COMPUTING TECHNOLOGY LIMITED COMPANY) 01 March 2022 (2022-03-01) description, paragraphs [0005]-[0063] | 1-18 |
| A | CN 114241597 A (HUAWEI TECHNOLOGIES CO., LTD.) 25 March 2022 (2022-03-25) description, paragraphs [0005]-[0087] | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2023** | **04 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | **INTERNATIONAL SEARCH REPORT** | International application No. |
|---|---|---|
| | | **PCT/CN2023/108089** |

**C.** **DOCUMENTS CONSIDERED TO BE RELEVANT**

| Category* | Citation of document, with indication, where appropriate, of the relevant passages | Relevant to claim No. |
|---|---|---|
| A | Matthew Loper et al. "SMPL: A Skinned Multi-Person Linear Model" *ACM transactions on Graphics,* Vol. 34, No. 6, 26 October 2015 (2015-10-26), pp. 1-16 section 3 | 1-18 |

Form PCT/ISA/210 (second sheet) (July 2022)

INTERNATIONAL SEARCH REPORT
Information on patent family members

International application No.

**PCT/CN2023/108089**

| Patent document cited in search report | | | Publication date (day/month/year) | Patent family member(s) | | | Publication date (day/month/year) |
|---|---|---|---|---|---|---|---|
| CN | 115376203 | A | 22 November 2022 | None | | | |
| CN | 114120436 | A | 01 March 2022 | None | | | |
| CN | 114241597 | A | 25 March 2022 | WO | 2023083030 | A1 | 19 May 2023 |

Form PCT/ISA/210 (patent family annex) (July 2022)

**REFERENCES CITED IN THE DESCRIPTION**

**Patent documents cited in the description**

- CN 202210857637